# EUROPEAN PATENT SPECIFICATION

(11) **EP 1 296 852 B1**
(45) Date of publication and mention of the grant of the patent: **28.04.2004**
(21) Application number: 01975821.8
(22) Date of filing: 09.05.2001
(51) Int. Cl.: B60R 5/00, B60R 7/04

(54) **HOLDER**
TRÄGER
SUPPORT

(30) Priority: 10.05.2000 GB 0011312
(43) Date of publication of application: 02.04.2003
(73) Proprietor: Hoe, Martin, St. Helier, Jersey JE2 3LE (GB)
(72) Inventor: Hoe, Martin, St. Helier, Jersey JE2 3LE (GB)
(74) Representative: Walker, Antony James Alexander
(86) International application number: PCT/GB2001/002028
(87) International publication number: WO 2001/085493

(56) References cited:
- EP-A- 0 972 681
- GB-A- 2 238 993
- US-A- 2 721 680
- US-A- 5 833 101

## Description

The present invention relates to a holder or carrying device for use in vehicles.

The carrying of fishing rods or other elongate articles within a vehicle generally makes poor use of the space available. Typically, this type of article is stowed loosely or wedged in the space behind the front seats of the vehicle in one of the following positions:
i) across the width of the rear seats (usually too short in length for the average fishing rod or collection of rods and then only usable conveniently if the seats are empty);
ii) where the feet of the rear passengers' rest (with the passengers having to move their feet into awkward positions);
iii) behind the backs of the front seats (where they get in the way of rear passengers and where the width is restricted);
iv) on the rear parcel shelf (very restricted in width and not advisable for use because of the risk that the article will travel dangerously forward when the brakes of the vehicle are applied); or
v) extending lengthways through the vehicle between the outermost side of the front seat and the inside body of the vehicle.

Whilst these positions can be utilised, albeit to the disadvantage of the passengers and driver, the region between the front seats and extending rearwardly and forwardly therefrom is not widely utilised because this would prevent access to the hand brake and the gear lever and thereby present a safety hazard.

Furthermore, it will be appreciated that by reason of the articles being loosely stowed or wedged in the vehicle there is nothing to prevent their unauthorised removal therefrom.

A carrying device according to the preamble of claim 1 is known from GB-A-2238993.

It is an object of the present invention to provide a holder or carrying device which enables fishing rods and other elongate articles to be stowed in the region between the two front seats and extending rearwardly and forwardly therefrom without impeding access to the controls situated there between.

It is yet another object of the present invention which provides a holder or carrying device which allows fishing rods and other elongate articles to be secured within the vehicle, thereby preventing or at least minimising the opportunities for theft therefrom.

According to the present invention, there is provided a carrying device according to claim 1.

The carrying device may be connected at each end to a respective one of the two front seats using a variety of devices. For example, the connection device may comprise a hook which is hooked around one of the supporting pillars of the head rest. Alternatively, it may comprise a clamp which is clamped to the front seat. As yet another alternative it may comprise a U- or V-shaped member which is braced against the side of the seat. Other connecting devices may present themselves to the person skilled in the art.

The carrying device may be of fixed length, but in a preferred embodiment of the present invention its effective length, that is to say the distance between the connection devices is adjustable to accommodate any spacing between the front seats.

In one embodiment of the present invention one or both of the connection devices is slidably adjustable along the carrying device to set the distance there between. The slidable connection devices may be set in position along the carrying device by a simple latch type mechanism or can be locked in place on the carrying device to prevent unauthorised removal of the carrying device once it is in position between two seats.

In an alternative embodiment the carrying devices comprise two arms or struts each of which carries a connection device on one end thereof and is connected to the other arm or strut at the opposite end thereof. The connection between the two arms allows for relative movement. This may be achieved by, for example, allowing the end of one arm to slide within a tubular section of the other arm. Alternatively, both arms may be slidable in an intermediate tubular support member. The distance between the two arms may be set by the user by, for example, moving the two arms towards or away from each other and then setting them at the required spacing by inserting a locking pin, a latch mechanism or even a key operated locking device. Alternatively, the two arms may be resiliently biased inwardly by a spring in tension to facilitate engagement of the connection devices with the two front seats or may be resiliently biased outwardly by a spring in compression to facilitate engagement of the connection devices with the two front seats.

In use, the carrying device is secured at each end to a respective one of the front seats of the vehicle, thereby forming a bridge there between. The height of this bridge up the seats may be determined by the user to ensure that any articles carried by the carrying device do not impede access to the hand brake and the gear lever. Conveniently this may be ensured by connecting the carrying device between one of the headrest support pillars of each front seat.

Articles to be carried by the carrying device may be simply strapped to it. However, in a preferred embodiment of the present invention the carrying device comprises a case or holder specifically adapted to carry the article in question. For example, in the case of fishing rods the case may take the form of a tube. The case or holder may be a permanently secured carrying device or it may be releaseably connected thereto by a latch, lock or other mechanism.

An embodiment of the present invention will now be described, by way of example, with reference to the accompanying drawings, in which:
Figure 1 shows in perspective elements of the carrying device in relation to the front seats of a vehicle;
Figure 2 shows in perspective a detailed view of elements of the carrying device;
Figure 3 shows in perspective a detailed view of certain elements of the carrying device;
Figure 4 shows in perspective a detailed view of specific elements of the carrying device utilised for attachment of objects;
Figure 5 shows in section one end of a carrying device according to the present invention comprising a V-shaped member for engagement with one of the two front seats of a vehicle and spring means for biasing said V-shaped member into engagement;
Figure 6 shows in section a carrying device according to the present invention comprising a pair of hook shaped members for engagement with the two front seats of a vehicle and a locking pin for locking each of said members in engagement therewith; and
Figure 7 shows in partial section a carrying device according to the present invention comprising a pair of hook shaped members for engagement with the two front seats of a vehicle and a key operated locking mechanism for locking each of said members in engagement therewith.

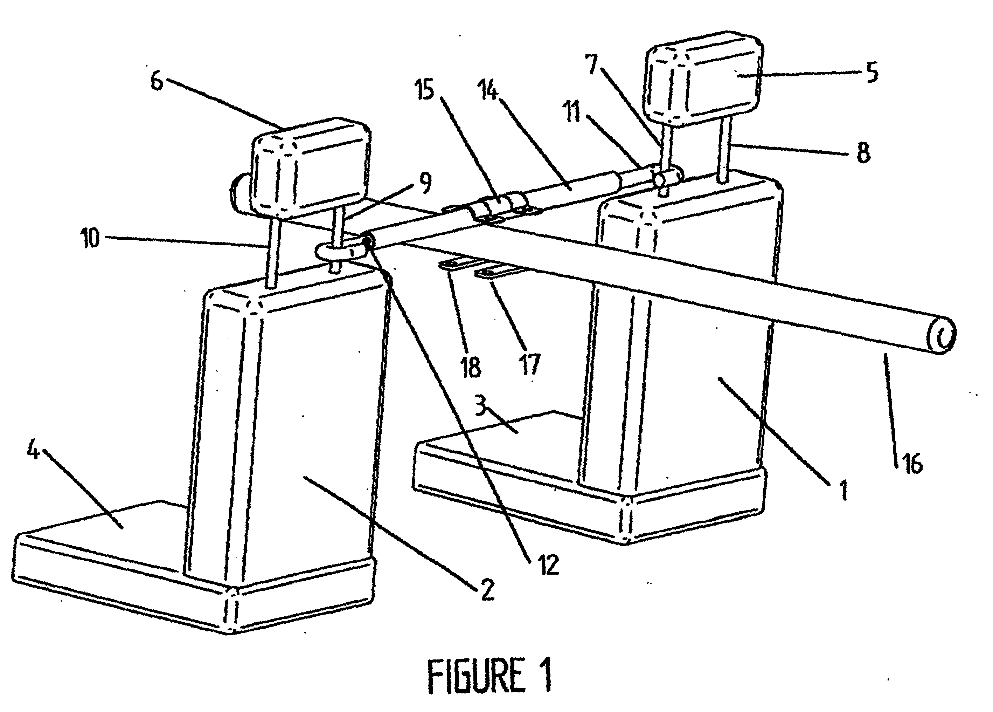

With reference to Figure 1, which represents a perspective view, the front seats of a vehicle have backs 1 and 2 and bases 3 and 4 and each seat is provided with a head restraint 5 and 6. The right-hand head restraint 5 is supported by struts 7 and 8 and the left-hand head restraint 6 is supported by struts 9 and 10.

The hooked end of a right-hand inner support rod 11 is located around strut 7 and that of left-hand support rod 12 is located around strut 9. The inner support rods 11 and 12 are connected at their non-hooked ends by means of a coiled spring 13 (not shown) which is in tension and thus holds the two rods in place and which allows the hooked end of each inner support rod 11 or 12 respectively to be temporarily extended so that it can be fixed around strut 7 or 9 respectively.

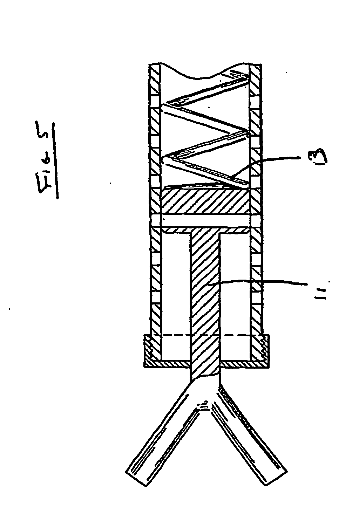

In an alternative embodiment of the present invention the inwardly facing hooked ends of the inner support rods may be substituted with outwardly facing hooked ends of, for example, Y-shaped profile, and the tensioned spring 13 by a spring in compression as shown in Figure 5. In this embodiment the inner support rod 11 is pushed inwardly against a compression spring 13 and then released to allow the Y-shaped engagement member engage against a respective one of the vehicle seat struts.

Turning back to Figure 1, an outer support tube 14 having dimensions such that it is a close but sliding fit on the inner support rods 11 and 12 carries a support bracket 15 to which rod holder 16 or individual rod parts (not shown) can be attached by means of flexible strips 17 and 18 used in conjunction with appropriate fastening means, e.g. thread, rope, elastic or strap (not shown).

All of the parts described are ideally made from a suitable plastic, but light weight and very cheap alternatives could be made from cardboard or from composite materials suitably structured and shaped so as to possess load bearing properties.

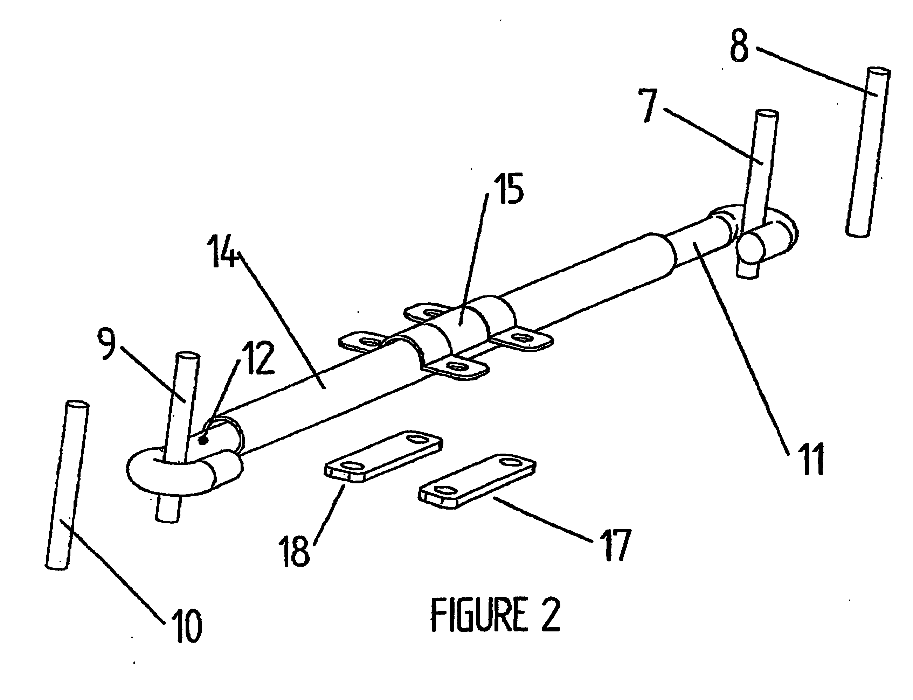

With reference to Figure 2 which represents a perspective view, the parts of the invention already shown in Figure 1 are shown again but in an enlarged view and without some of the parts of the vehicle which are shown in Figure 1.

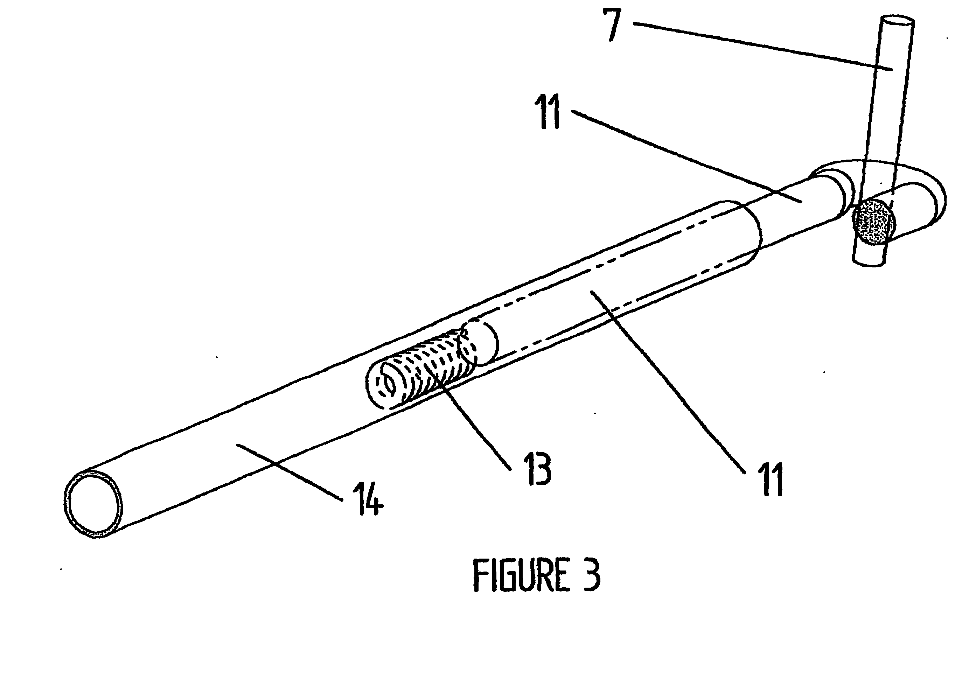

With reference to Figure 3 which represents a perspective view, the right-hand part of the carrying device is shown as though the outer support tube 14 was transparent. It can be seen that coiled tension spring 13 is located adjacent to the inner end of inner support rod 11 and that the hooked end of rod 11 is fixed around the left-hand support strut 7 of right-hand head restraint 5.

Various means are available for fixing the end of spring 13 to the end of rod 11. Thus, for instance, a section of the end of rod 11 equal in length to that of two or three turns of spring 13 could be provided with an external thread (not shown) so that spring 13 could be screwed on to the end of support rod 11. The same type of thread could be provided on the end of left-handed support rod 12 (not shown in this diagram but see Figures 1 and 2) and the two support rods 11 and 12 could be assembled inside the outer support rod 14 by screwing each rod into spring 13.

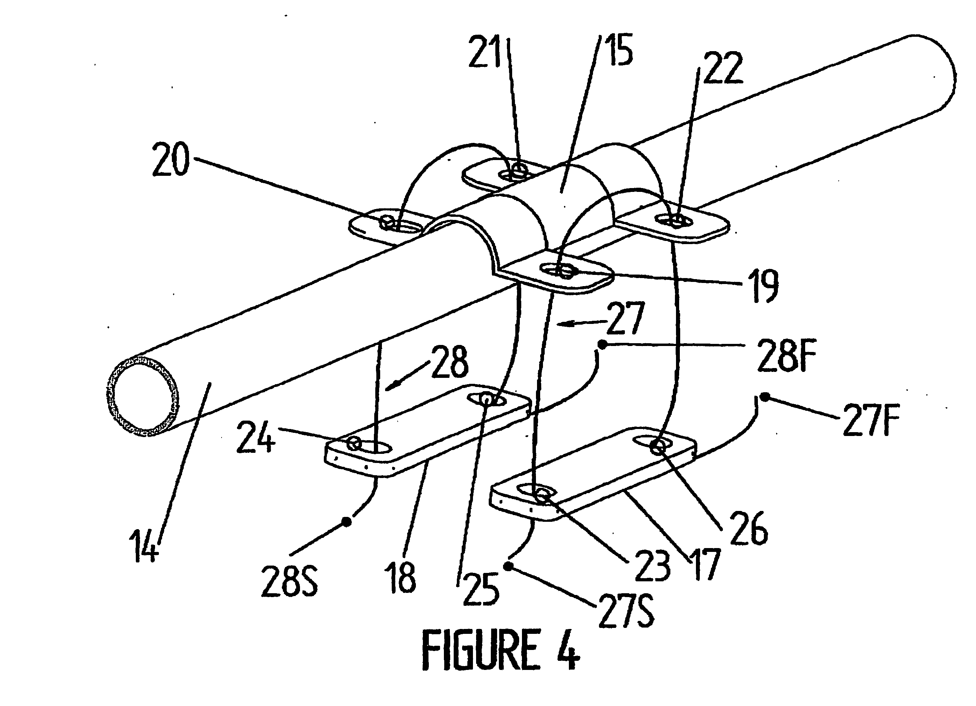

With reference to Figure 4 which represents a perspective view, some elements of the carrying device already shown in Figures 1 and 2 are shown again but in enlarged form and together with means for fixing a rod holder to the device. Support bracket 15 has holes 19, 20, 21 and 22 and flexible strips 17 and 18 have holes 23, 24, 25 and 26. Lengths 27 and 28, respectively, of thread, rope, elastic or strap can thus be threaded through holes 23, 19, 22 and 26 and holes 24, 20, 21 and 25 respectively and stops (not shown) can be provided at the rear ends 27S and 28S respectively of the lengths of thread, rope, elastic or strap 27 and 28 respectively so that the front ends 27F and 28F respectively of lengths 27 and 28 can be pulled up and around the periphery of the rod holder which is to be supported by the carrying device. Various alternative means are available for temporarily locking the thread, rope, elastic or strap 27 and 28 around the rod holder. These range from simply passing the appropriate end again through hole 22 or 21 or through the space between the body of support bracket 15 and the appropriate part of 27 or 28.

It is pointed out with reference to the foregoing that holes 19, 20, 21, 22, 23, 24, 25 and 26 can be of any desired shape consistent with the method of securing the rod holder or other article to the carrying device. The use of straps, for instance, would benefit from forming holes 19 to 26 inclusive in the shape of rectangular slots.

It is further pointed out with reference to the foregoing that in the absence of elements 15, 17 and 18 a thick elastic band could be laid on top of outer support tube 14 approximately at its centre so that one loop dropped over the front of tube 14 whilst the other loop dropped over the rear or tube 14. The rod holder could then be passed through the two loops so that it hung underneath the support tube 14. Alternatively, the rod holder could be supported so that it rested on the upper surface of support tube 14 in which case the loops of the elastic band would be pulled above the upper surface of tube 14.

It is still further pointed out with respect to the foregoing that support bracket 15 could be placed underneath tube 14 and that the flexible strips 17 and 18 could then be placed above support tube 14 so that the rod holder could then be placed so that it rested on the outer support tube 14.

It is yet further pointed out with respect to the foregoing and particularly with reference to Figure 4 that support bracket 15 could be used together with a similar bracket placed directly underneath it but below outer support tube 14 and together with flexible strips 17 and 18 which are sandwiched between the holed flanges of the two brackets. The rod holder could then be pushed between outer support tube 14 and flexible strips 17 and 18 so that it was held in place by the tension in the flexible strips and this method provides the added alternative of choosing to place the rod holder above or below the outer support tube 14.

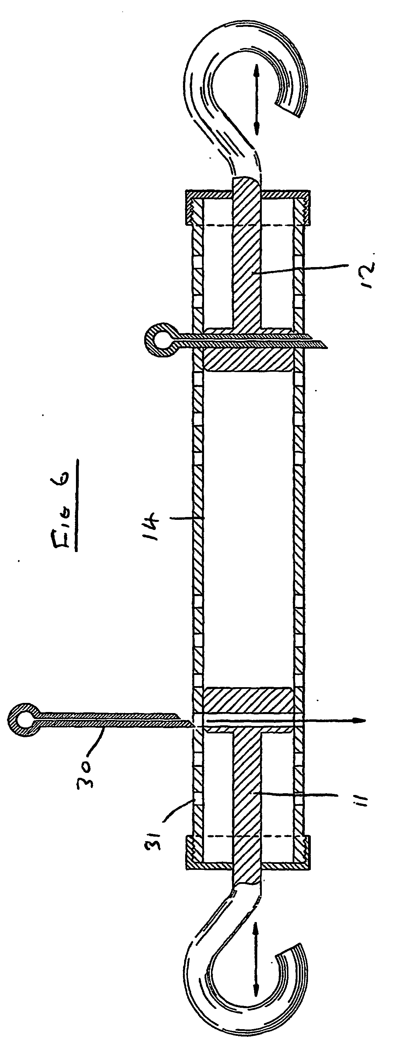

Referring now to Figure 6 of the drawings there is shown an alternative embodiment of a carrying device according to the present invention. For ease of understanding the same reference numerals have been used to identify parts of the device corresponding with the device of Figure 1. The device of Figure 6 differs from that of Figure 1 in that the inner support rods 11 and 12, which each carry a hook for engagement with the innermost head rest strut of a respective one of the two front seats of a vehicle, are locked into engagement with the said strut by inserting a locking pin 30 through one of a plurality of pairs of apertures 31 in the outer support tube 14 and the inner support rod 11, 12. Since the spacing between the two front seats may vary from vehicle to vehicle a plurality of pairs of apertures 31 is provided in each end of the outer support tube 14 which are spaced along the length thereof.

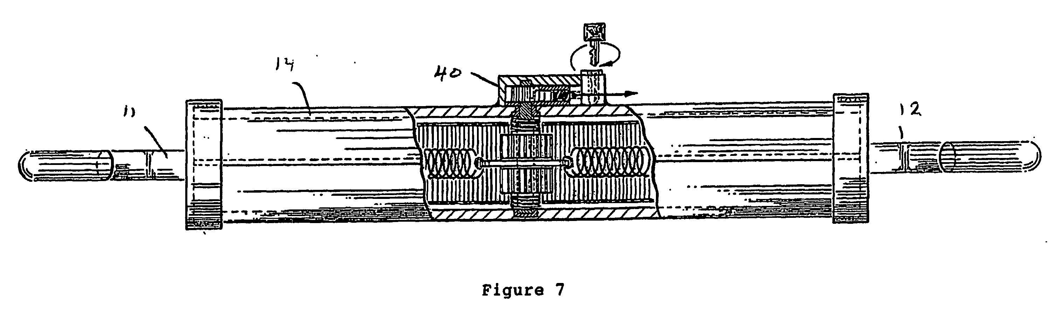

Referring to Figure 7 of the drawings there is shown yet another embodiment of a carrying device according to the present invention. Here a key operated locking device 40 is provided to secure and lock each of the inner support rods 11 and 12 in position once the said inner support rods have been adjusted to the required position to engage the hook carried by each one in engagement with the innermost head rest strut of a respective one of the two front seats of a vehicle. It will be appreciated that by providing a key operated mechanism removal of the carrying device from between the two front seats is made more difficult, thereby providing an increased deterrent against theft.

## Claims

1. A carrying device for securing one or more articles (16) to be stowed in a vehicle between the two front seats (3;4) thereof comprising a support member (14), means (11;12) for releaseably connecting the support member to each of the front seats and means (15;17;18) for securing the said one or more articles to the support member, **characterised in that** the support member comprises a first tubular arm (14) and a second arm (11;12) slidably received within the first tubular arm, each of which carries connection means on one end thereof, and the two arms are resiliently biased together (13) to facilitate engagement of the connection means with the seats.

2. A carrying device according to claim 1, wherein the connection means comprises a pair of hooks each of which is adapted to engage with the head rest support pillar (7;8) of a respective one of the two seats.

3. A carrying device according to claim 1, wherein the connection means comprises a pair of clamps each of which is adapted to be secured to a respective one of the two seats.

4. A carrying device according to any preceding claim, wherein the said securing means comprises straps.

5. A carrying device according to any of claims 1 to 3, wherein the said securing means comprises a case or holder adapted to carry the said one or more articles.

6. A carrying device according to claim 5, wherein the case or holder is releaseably connected to the support means by a latch, lock or other mechanism.

## Patentansprüche

1. Tragvorrichtung zum Befestigen eines oder mehrerer Gegenstände (16), die in einem Fahrzeug zwischen den beiden Vordersitzen desselben (3; 4) zu verstauen sind, welche ein Halteelement (14), Mittel (11; 12) zum lösbaren Verbinden des Halteelements mit jedem der Vordersitze und Mittel (15; 17; 18) zum Befestigen des genannten einen oder der mehreren Gegenstände an dem Halteelement aufweist, **dadurch gekennzeichnet, dass** das Halteelement einen ersten röhrenförmigen Arm (14) und einen zweiten Arm (11, 12) aufweist, der verschiebbar in dem ersten röhrenförmigen Arm aufgenommen wird, von denen jeder ein Verbindungsmittel an einem Ende desselben trägt, und die zwei Arme elastisch zusammen (13) vorgespannt sind, um Eingriff des Verbindungsmittels mit den Sitzen zu vereinfachen.

2. Tragvorrichtung nach Anspruch 1, bei der das Verbindungsmittel ein Paar von Haken aufweist, die jeweils für Eingriff mit dem Kopfstützenpfeiler (7; 8) eines jeweiligen der beiden Sitze ausgelegt sind.

3. Tragvorrichtung nach Anspruch 1, bei der das Verbindungsmittel ein Paar von Klammern aufweist, von denen jede für Befestigung an einem jeweiligen der beiden Sitze ausgelegt ist.

4. Tragvorrichtung nach einem vorhergehenden Anspruch, bei der das genannte Befestigungsmittel Riemen aufweist.

5. Tragvorrichtung nach einem der Ansprüche 1 bis 3, bei der das genannte Befestigungsmittel eine Fassung oder einen Halter aufweist, die/der zum Tragen des genannten einen oder der mehreren Gegenstände ausgelegt ist.

6. Tragevorrichtung nach Anspruch 5, bei der die Fassung oder der Halter lösbar mit dem Haltemittel durch eine Verriegelung, einen Verschluss oder einen anderen Mechanismus verbunden ist.

## Revendications

1. Dispositif de transport servant à assujettir un ou plusieurs articles (16) destinés à être rangés dans un véhicule entre les deux sièges Avant (3 ; 4) de celui-ci, comprenant un élément de support (14), des moyens (11 ; 12) servant à raccorder de façon détachable l'élément de support à chacun des sièges Avant, et des moyens (15 ; 17 ; 18) servant à assujettir ledit un ou lesdits plusieurs articles sur l'élément de support, caractéristé en ce que l'élément de support comprend un premier bras tubulaire (14) et un deuxième bras (11 ; 12) qui est reçu de façon coulissante à l'intérieur du premier bras tubulaire, chaque bras portant un moyen de raccordement sur l'une de ses extrémités, et les deux bras sont poussés de façon élastique l'un vers l'autre (13) afin de faciliter l'engagement du moyen de raccordement avec les sièges.

2. Dispositif de transport, selon la revendication 1, dans lequel le moyen de raccordement comprend une paire de crochets, chaque crochet étant adapté de façon à s'engager avec la colonne de support de l'appui-tête (7 ; 8) de l'un respectif des deux sièges.

3. Dispositif de transport, selon la revendication 1, dans lequel le moyen de raccordement comprend une paire de pinces, chaque pince étant adaptée de façon à être assujettie sur l'un respectif des deux sièges.

4. Dispositif de transport, selon l'une quelconque des revendications précédentes, dans lequel ledit moyen d'assujettissement comprend des sangles.

5. Dispositif de transport, selon l'une quelconque des revendications 1 à 3, dans lequel ledit moyen d'assujettissement comprend une boîte ou un étui qui est adapté de façon à pouvoir transporter ledit un ou lesdits plusieurs articles.

6. Dispositif de transport, selon la revendication 5, dans lequel la boîte ou l'étui est relié de façon détachable au moyen de support par l'intermédiaire d'un verrou, d'une serrure ou de tout autre mécanisme.
